# EUROPÄISCHE PATENTSCHRIFT

(11) **EP 1 405 839 B1**
(45) Veröffentlichungstag und Bekanntmachung des Hinweises auf die Patenterteilung: **30.03.2005**
(21) Anmeldenummer: 03017575.6
(22) Anmeldetag: 07.08.2003
(51) Int. Cl.: C07B 63/04

(54) **Verfahren zur Abtrennung von Zinksalzen aus Zink-Alkoholaten oder Zink-Amiden enthaltenden nicht-wässrigen Syntheselösungen**
Process for separating zinc salts from zinc alcoholates or zinc amides containing non-aqueous synthesis solvents
Procédé de séparation des sels de zinc d'alcoolates ou d'amides de zinc dans des solvants de synthèse

(30) Priorität: 14.08.2002 DE 10237274
(43) Veröffentlichungstag der Anmeldung: 07.04.2004
(73) Patentinhaber: Consortium für elektrochemische Industrie GmbH, 81379 München (DE)
(72) Erfinder: Sorger, Klas, Dr., 81371 München (DE); Petersen, Hermann, Dr., 84489 Burghausen (DE); Stohrer, Jürgen, Dr., 82049 Pullach (DE)
(74) Vertreter: Schuderer, Michael, Dr.

(56) Entgegenhaltungen:
- EP-A- 0 526 997
- PALOMO CLAUDIO ET AL.: "Addition of alpha-halonitriles to carbonyl compounds catalyzed by zinc-trimethylchlorosilanes: a general synthesis of beta-trimethyloxy nitriles" TETRAHEDRON LETTERS, Bd. 31, Nr. 15, 1990, Seiten 2205-8, XP002261405
- MARVIN M. HANSEN ET AL.: "Preparation of an Alkylzinc enolate" ORGANOMETALLICS, Bd. 6, 1987, Seiten 2069-74, XP002261406

## Beschreibung

Die Erfindung betrifft ein Verfahren zur Abtrennung von Zinksalzen aus Zink-Alkoholaten oder Zink-Amiden enthaltenden nicht-wässrigen Syntheselösungen.

Organo-Zinkverbindungen sind industriell bedeutsame metallorganische Verbindungen zur Herstellung von Synthesebausteinen für pharmazeutische Wirkstoffe, Duftstoffe und Pflanzenschutzmittel.

Beispielsweise finden α-Bromozinkester, hergestellt durch Reaktion von α-Bromcarbonsäureestern mit Zink, in Umsetzungen mit elektrophilen Substraten wie z. B. Aldehyden, Ketonen oder Iminen Einsatz (Reformatsky-Synthesen). Asymmetrische Additionen von Dialkyl- oder Diarylzink-verbindungen an Aldehyde oder Ketone zur Herstellung chiraler Alkohole als Synthese-Intermediate sind von zunehmendem industriellen Interesse.

Bei Einsatz von Organo-Zinkverbindungen in industriellen Syntheseprozessen entstehen bei der Aufarbeitung Zinkionen enthaltende anorganische Salze oder Zinksalze mit zusätzlich organischen Bestandteilen, die üblicherweise in wässrigem Medium gelöst, suspendiert oder emulgiert sind. Zinkionen als Schwermetallionen, insbesondere als Bestandteil wässriger oder wässrig-organischer Abwässer gelten gemeinhin als umweltbelastend, weil diese nicht zerstört, sondern lediglich chemisch verändert werden können, wie beispielsweise durch Umwandlung in lösliche oder unlösliche Zinkverbindungen oder durch Reduktion in den elementaren Zustand. Zinkionen enthaltende wässrige Lösungen, Suspension oder Emulsionen müssen deshalb vor der Reinigung, Verbrennung, Deponierung oder Entsorgung als entsprechende Abwässer von Zinkionen bis auf einen gesetzlich vorgeschriebenen Restgehalt befreit werden.

Zur Reduzierung des Zinkionengehalts in wässrigen Lösungen, Suspension oder Emulsionen, gegebenenfalls organische Bestandteile enthaltend, wie sie beispielsweise nach Aufarbeitung von Syntheselösungen oder Reaktionsmischungen bei industriellen Herstellungsprozessen unter Einsatz von Organo-Zinkverbindungen erhalten werden, sind verschiedene Verfahrensweisen durch Ausfällung von schwerlöslichen Zinksalzen und Abtrennung der schwerlöslichen Salze von der wässrigen Phase bekannt.

In US 4678584 wird eine Methode zur Entfernung von Zinkionen aus Abwässern durch Fällung als schwerlösliche Sulfide durch Behandlung der Abwässer mit Trithiocarbonat beschrieben.

Aus US 5762807 ist ein Prozess zur Ausfällung von komplexierten und nicht-komplexierten Schwermetallen wie beispielsweise Zink aus wässrigen Medien durch Behandlung mit einer wässrigen Mischung aus Polysulfid- und Polysulfanverbindungen bekannt.

In EP 0526997 werden gelöste chelatisierte Zinkionen aus wässrigen Lösungen in einem mehrstufigen Verfahren durch Ausfällung schwerlöslicher Zinksalze entfernt.

Die aus dem Stand der Technik bekannten Verfahren haben jedoch eine Reihe von Nachteilen. Die Ausfällung der Schwermetallsalze erfolgt bei den bekannten Verfahren grundsätzlich aus wässrigen Lösungen, wie sie nach hydrolytischer Aufarbeitung der Syntheselösungen bzw. Reaktionsmischungen bei Einsatz von Organo-Zinkverbindungen vorliegen. Dies bedeutet, dass zuerst ein wässriges Zinkionen enthaltendes Medium erzeugt wird, aus dem die Zinksalze in einem nachfolgenden Schritt durch Ausfällung wieder entfernt werden müssen und dass die nach der Abtrennung der Zinksalze erhaltenen Abwässer gereinigt werden müssen. Diese mit erheblichem Aufwand verbundene Vorgehenswiese ist zudem sehr unwirtschaftlich. Aus ökonomischen und ökologischen Gründen wesentlich wünschenswerter wäre ein Prozess, bei dem überhaupt keine wässrige Phase bzw. kein Zinkionen enthaltendes Abwasser generiert wird.

Zudem werden nach Abtrennung der gefällten Schwermetallsalze üblicherweise Abwässer erhalten, die in nicht unerheblichem Ausmaß organische Bestandteile und organische mit Wasser mischbare Lösungsmittel enthalten wie z. B. Tetrahydrofuran, das als Lösungsmittel bei Zink-organischen Synthesen dient. Aus Gründen der Wirtschaftlichkeit und zur Verringerung der Abfallmengen ist insbesondere bei Anwendung im technischen Maßstab eine Rückgewinnung der eingesetzten Lösungsmittel aus der wässrigen Phase, z. B. durch Extraktion oder Destillation erforderlich, was allerdings wiederum mit erheblichem finanziellen und technischem Aufwand verbunden ist.

Darüber hinaus besteht die Möglichkeit, dass sich die hergestellten Reaktionsprodukte oder ihre Lösungen, die mit den Zinkionen über funktionelle Hydroxy-, Carboxy-, Thio- oder Amino-Gruppen komplexieren können, bei Behandlung mit dem Fällungsmittel (wie z. B. Sulfid, Polysulfid, Polysulfan, Trithiocarbonat) unter den Bedingungen, die zur Ausfällung und Abtrennung der Zinksalze notwendig sind, insbesondere durch thermische Belastung oder lange Reaktionszeiten, zersetzen oder durch unerwünschte Nebenprodukte verunreinigt werden und somit die Qualität der hergestellten Produkte gemindert und die Wirtschaftlichkeit des gesamten Herstellungsprozesses beeinträchtigt wird.

Die Komplexierung der Zinksalze über funktionelle Gruppen, wie z. B. Oxy-, Amin-, Amid- oder Thiogruppen der durch Organozink-Synthese hergestellten Produkte führt dazu, dass das Zink als abzutrennende Verunreinigung ganz oder teilweise in Lösung bleibt.

Zudem erfordert die Ausfällung der schwerlöslichen Zinksalze nach US 5762807 und EP 0526997 eine Reihe weiterer Verfahrensschritte wie z. B. die Einstellung eines vorgegebenen pH-Wertes durch Zugabe von Säure oder Base, die Zugabe von weiteren Reagenzien oder Filtrierhilfsmitteln oder die Temperung des Niederschlags um eine bessere Filtrierbarkeit zu erreichen. Der gesamte aus dem Stand der Technik bekannte Fällungsprozess macht spezielle Anlagen notwendig, was zu erheblichem Zeitaufwand und Kosten führt und die Wirtschaftlichkeit der vorbekannten Fällungsverfahren insbesondere bei Anwendung im technischem Maßstab beeinträchtigt.

Die aus wässrigem Medium ausgefällten Zinksalze wie z. B. Zinkhydroxid, Zinkcarbonat oder Zinksulfidverbindungen oder deren Mischungen sind oft schlecht filtrierbar und enthalten nach Abtrennung durch Filtration oder Zentrifugation erhebliche Mengen an Wasser. Da die ausgefällten Zinksalze deponiert oder dem Zink-Recycling zugeführt werden müssen, wird die Wirtschaftlichkeit des gesamten Prozesses insbesondere bei Durchführung im industriellen Maßstab dadurch beeinträchtigt, dass der Transport stark wasserhaltiger voluminöser Zinksalze oder Trocknung oder anderweitige Nachbehandlung der Zinksalze mit erheblichem wirtschaftlichem Aufwand verbunden ist.
Keines der aus dem Stand der Technik bekannten Verfahren ermöglicht die unmittelbare Abtrennung von Zinksalzen aus Zinkverbindungen enthaltenden nicht-wässrigen Synthese- bzw. Reaktionslösungen ohne vorangehende wässrige Aufarbeitung bzw. unter nicht-wässrigen Fällungsbedingungen oder durch nicht-wässrige Fällungsmedien.

Es bestand daher die Aufgabe ein einfaches, ökonomisches und universell anwendbares Verfahren zur Abtrennung von Zink vorliegend als Zinkionen oder Zinksalze aus Zinkverbindungen enthaltenden Syntheselösungen bzw. Reaktionslösungen bereitzustellen, dass die aus dem Stand der Technik bekannten Probleme löst.

Die Aufgabe wurde gelöst, indem ein Verfahren entwickelt wurde, mit Hilfe dessen Zink aus Zink-Alkoholate oder Zink-Amide enthaltenden Syntheselösungen nach Silylierung, Acylierung, Alkylierung oder Arylierung in Gegenwart einer mindestens zwei Stickstoff-Donatoren enthaltenden Verbindung unter nicht-wässrigen Bedingungen quantitativ ausgefällt werden kann.

Gegenstand der Erfindung ist ein Verfahren zur Entfernung von Zink aus organischen Lösungen enthaltend Zink-Alkoholate oder Zink-Amide,
dadurch gekennzeichnet, dass
die Lösung mit einem Alkylierungs-, Arylierungs-, Acylierungs- oder Silylierungsreagenz in Gegenwart eines Fällungsreagenz mit mindestens zwei Stickstoff-Donatoren versetzt wird und anschließend der ausfallende Feststoff abgetrennt wird.

Das erfindungsgemäße Verfahren wird in einem organischen Lösungsmittel durchgeführt.

Als Lösungsmittel können für das erfindungsgemäße Verfahren alle für die Reaktion von Organo-Zinkverbindungen geeigneten inerten Lösungsmittel eingesetzt werden. Eine zusammenfassende Darstellung geeigneter Lösungsmittel für Organo-Zinkreaktionen ist beispielsweise in A. Fürstner, Synthesis 1989, S. 571 enthalten.

Bevorzugte Lösungsmittel sind Kohlenwasserstoffe, Ether, Carbonsäureester, Amine, Säureamide, Ketone, polar aprotische Lösungsmittel, halogenierte Kohlenwasserstoffe oder Gemische der genannten Lösungsmittel, insbesondere Kohlenwasserstoffe, Carbonsäureester und lineare oder cyclische Mono- und Polyether.

Besonders bevorzugte Lösungsmittel sind insbesondere Benzol, Toluol, Ethylbenzol, Propylbenzol, Isopropylbenzol, Butylbenzol, Xylol, Xylol-Isomerengemisch, Trimethylbenzol, Pentan, Hexan, Octan, Isooctan, Nonan, Nonan-Fraktion, Cyclohexan, Cycloheptan, Cyclooctan, Dimethylcyclohexan, Ethylcyclohexan, Propylcyclohexan, Butylcyclohexan, Petroleumbenzin und Paraffin, Diethyl-, Dipropyl-, Dibutylether, Diisopropylether, Methyl-tert.-butylether, Dimethoxymethan, Diethoxymethan, Dimethoxyethan, Diethoxyethan, Diethylenglykol-dimethylether, Diethylenglykol-diethylether, Diethylenglykol-dipropylether, Diethylenglykol-dibutylether, Triethylenglykol-dimethylether, Triethylenglykol-diethylether, Triethylenglykol-dibutylether, Tetrahydrofuran, 2-Methyltetrahydrofuran, 2,5-Dimethyltetrahydrofuran, 2,5-Dimethoxytetrahydrofuran und 1,4-Dioxan, Methyl-, Ethyl-, n-Propyl-, i-Propyl-, n-Butyl-, i-Butyl-, t-Butyl-, n-Hexyl-, n-Pentyl-, i-Pentylacetat, -propionat und -butyrat, 2-Essigsäure-2-ethoxyethylester, Pyridin, N-Acetylpyrrolidin, N-Acetylpyrrol, N-Acetylsuccinimid, Tetramethylharnstoff, N,N'-Dimethylethylenharnstoff, Tetramethylguanidin, Aceton, Methylethylketon, Diethylketon, Isopropylmethylketön, Isopropylethylketon, Acetonitril, Propionitril, Butyronitril, Dimethylformamid, Diethylformamid, Dimethylacetamid, Diethylacetamid, 1-Methyl-2-pyrrolidon, Dimethylsulfoxid und Methylenchlorid, insbesondere Hexan, Ethylacetat, Tetrahydrofuran und 1,4 Dioxan.

Die Lösungsmittel oder deren Gemische eignen sich für alle Schritte des erfindungsgemäßen Verfahrens.

Bei der Umsetzung von Organo-Zinkverbindungen mit Substraten in geeigneten organischen Lösungsmitteln werden als Synthesezwischenprodukte zunächst Halogenozink-Alkoholate bzw. Halogenozink-Amide oder Organozink-Alkoholate bzw. Organozink-Amide gebildet (Zink-Alkoholate bzw. Zink-Amide).

In einer möglichen Ausführungsform des Verfahrens, wird die erfindungsgemäße Abtrennung des Zinks aus Lösungen enthaltend Halogenozink-Alkoholate oder Halogenozink-Amide durchgeführt.

Eine typische Ausführungsform des erfindungsgemäßen Verfahren ist die Entfernung von Zink aus organischen Syntheselösungen von Reformatsky-Reaktionen.

In einer weiteren typische Ausführungsform des Verfahrens, wird die erfindungsgemäße Abtrennung des Zinks aus Lösungen enthaltend Organozink-Alkoholate oder Organozink-Amide durchgeführt, insbesondere aus solchen organischen Lösungen, die bei der Umsetzung von Alkylzink- oder Arylzinkverbindungen mit elektrophilen Substraten, bekannt als Alkylierungs- oder Arylierungsreaktion von Carbonylverbindungen, gebildet werden.

Nach dem erfindungsgemäßen Verfahren werden die Zink-Alkoholate oder Zink-Amide als Synthesezwischenprodukte enthaltenden Syntheselösungen bzw. Reaktionslösungen unmittelbar mit geeigneten Silylierungs-, Acylierungs-, Alkylierungs- oder Arylierungsreagenzien zur Reaktion gebracht, wobei das gewünschte Reaktionsprodukt durch Umsetzung des Alkoholats oder Amids mit dem Silylierungs-, Acylierungs-, Alkylierungs- oder Arylierungsmittel und ein Zinksalz wie z. B. Zinkdihalogenid gebildet werden.

Die Produkte in Form einer Silyl-, Acyl-, Alkyl- oder Aryloxyverbindung oder Silyl-, Acyl-, Alkyl- oder Arylaminverbindung und das Zinksalz sind in dem organischen Lösungsmittel typischerweise gelöst oder ganz oder teilweise suspendiert, wobei das Produkt gegebenenfalls über funktionelle Gruppen wie z. B. Oxy-, Amin-, Amid- oder Thiogruppen mit dem Zinksalz komplexieren kann und folglich das Zinksalz ganz oder teilweise in Lösung bleibt.

Zur Abtrennung des teilweise oder vollständig gelösten Zinks aus den organischen Syntheselösungen wird nach dem erfindungsgemäßen Verfahren eine mindestens zwei Stickstoff-Donatoren enthaltende Verbindung als Fällungsreagenz (Fällungsreagenz) zugesetzt.

Zur Abtrennung des Zinks aus den Zink-Alkoholaten oder Zink-Amiden enthaltenden Syntheselösungen nach dem erfindungsgemäßen Verfahren können die verwendeten Reagenzien in beliebiger Reihenfolge eingesetzt werden.

Es ist auch möglich, das Silylierungs-, Acylierungs-, Alkylierungs- oder Arylierungsreagens bereits bei Herstellung des Zink-Alkoholats oder Zink-Amids vorzulegen. In diesem Fall reagiert das gebildete Zink-Alkoholat oder Zink-Amid unmittelbar mit dem Silylierungs-, Acylierungs-, Alkylierungs- oder Arylierungsreagens unter Bildung des gewünschten Produkts und eines Zinksalzes.

Es ist auch möglich, das Fällungsreagenz bereits zu der die Zink-Alkoholate oder Zink-Amide als Synthesezwischenprodukte enthaltenden Syntheselösung vor der weiteren Umsetzung mit dem Silylierungs-, Acylierungs-, Alkylierungs- oder Arylierungsreagens zuzusetzen.

Das erfindungsgemäße Fällungsreagenz bildet mit dem Zink unter Ausnützung des Chelateffekts einen in dem für die Synthese verwendeten organischen Lösungsmittel schwer löslichen, stabilen und gut abtrennbaren Feststoff in Form eines Zink-Komplexes, der es ermöglicht, das Zink aus der organischen Reaktionslösung praktisch vollständig abzutrennen. Durch den Chelateffekt des erfindungsgemäßen Fällungsreagenz wird das zuvor an das Zinksalz komplexierte Reaktionsprodukt vollständig verdrängt.

Werden keine zur Chelatisierung befähigten Verbindungen eingesetzt, beispielsweise Verbindungen, die nur über einen Stickstoff-Donator verfügen (z. B. Monoamine; wie beispielsweise Triethylamin), dann gelingt die Ausfällung und Abtrennung der Zinksalze nicht oder nur unvollständig (siehe Vergleichsbeispiele) und macht zur vollständigen Abtrennung des Zinks weitere aufwändige Schritte erforderlich, die die Wirtschaftlichkeit des gesamten Verfahrens erheblich negativ beeinträchtigen.

Der ausgefällte Zinksalz-Komplex kann anschließend unter geeigneten Bedingungen, beispielsweise Filtration oder Zentrifugation, gegebenenfalls bei reduzierter Temperatur abgetrennt werden.

Die nach Abtrennung der ausgefällten Zinksalze erhaltenen Mischungen enthalten das hergestellte Produkt(gewünschtes Syntheseprodukt) und organisches Lösungsmittel.

Die Ausfällung des Zinks mit dem Fällungsreagenz nach dem erfindungsgemäßen Verfahren erfolgt nahezu quantitativ, so dass das hergestellte Reaktionsprodukt und das hiervon abgetrennte Lösungsmittel praktisch keine Zinkrückstände mehr aufweisen.

Die hergestellten Produkte können nach bekannten, üblicherweise verwendeten Methoden wie Extraktion, Destillation, Kristallisation oder mittels chromatographischer Methoden isoliert werden. Das nach Entfernung des Lösungsmittels erhaltene Rohprodukt ist wegen seiner sehr hohen Reinheit unmittelbar in nachfolgenden Reaktionen und Umsetzungen einsetzbar.

Die nach Abtrennung der Zinksalze nach dem erfindungsgemäßen Verfahren erhaltenen Produkte oder Lösungen der Produkte weisen einen sehr geringen Gehalt an Zinkionen von 0.05 bis 700 ppm, üblicherweise 0.1 bis 200 ppm auf. Die Produkte werden in weiteren Syntheseprozessen eingesetzt, wobei gegebenenfalls eine weitere Abtrennung der Zinkionen stattfinden kann.

Eine typische Ausführungsform des erfindungsgemäßen Verfahrens ist die Zinkabtrennung aus Reaktionslösungen von Reformatsky-Reaktionen. Bei der Reaktion von reaktiven Halogenverbindungen, insbesondere α-Halogencarbonylverbindungen mit elektrophilen Substraten wie z. B. Aldehyden, Ketonen, Iminen, Nitrilen, Carbonsäureanhydriden, -chloriden, Lactonen, Orthoformiaten, Formiaten, Epoxiden, Azirinen, Aminalen und Nitronen (Substrate) in Gegenwart von elementarem Zinkmetall (Reformatsky-Reaktion) entstehen in einem ersten Schritt durch Umsetzung von Organo-Zinkverbindungen (Reformatsky-Reagenzien), insbesondere von α-Halogenozink-Estern mit den Substraten Halogenozink-Alkoholate oder Halogenozink-Amide als Synthesezwischenprodukte. Diese Zinkionen enthaltenden Synthesezwischenprodukte sind in dem eingesetzten organischen Lösungsmittel gelöst oder ganz oder teilweise suspendiert.

In einer typischen Ausführungsform des erfindungsgemäßen Verfahrens wird ein Halogenozink-Alkoholat gebildet, z. B. durch Reaktion von α-Bromozink-essigsäuremethylester mit Benzaldehyd in Ethylacetat als Lösungsmittel und anschließend mit Trimethylchlorsilan umgesetzt. Das bei der Reaktion gebildete Zinkbromidchlorid bleibt dabei durch Komplexierung zunächst vollständig in Lösung. Wird die gleiche Umsetzung in Tetrahydrofuran als Lösungsmittel durchgeführt, kommt es zu einer teilweisen Ausfällung von Zinksalz bzw. Zinksalz-Produkt-Komplex.

Nach Zugabe eines erfindungsgemäßen Fällungsreagenz, wie z. B. Piperazin fällt ein schwer löslicher Zinksalz-Piperazin-Komplex aus.

Aus C. Palomo et al. (C. Palomo, J. M. Aizpurua, M. C. Lopez, N. Aurrekoetxea, M. Oiarbide Tetrahedron Lett. 1990, 31, S. 6425 und C. Palomo, J. M. Aizpurua, M. C. Lopez, N. Aurrekoetxea, Tetrahedron Lett. 1990, 31, S. 2205) ist die Umsetzung von intermediär gebildeten Zink-Alkoholaten mit Trimethylchlorsilan als Silylierungsreagens in Tetrahydrofuran als Lösungsmittel bekannt. Möglichkeiten zur Abtrennung gebildeter Zinksalze, die eine großtechnische, wirtschaftliche und umweltschonende Synthese eröffnen würde, wurden jedoch nicht beschrieben.

Eine weiter typische Ausführungsform des erfindungsgemäßen Verfahrens ist die Abtrennung von Zink aus Reaktionslösungen, die bei der Reaktion von Dialkylzink- oder Diarylzinkverbindungen mit elektrophilen Substraten, insbesondere mit Aldehyden oder Ketonen entstehen. Bei diesen Umsetzungen, bekannt als Alkylierungs- oder Arylierungsreaktion von Carbonylverbindungen (z. B. K. Soai, T. Shibata in Comprehensive Asymmetric Catalysis, E. N. Jacobsen, A. Pfalz, H. Yamamoto, Hrsg., Band II, Springer, Berlin 1999, S. 911-922), entstehen durch Umsetzung der Organo-Zinkverbindungen mit den Substraten Organozink-Alkoholate oder Organozink-Amide als Synthesezwischenprodukte. Diese Zinkionen enthaltenden Synthesezwischenprodukte sind in dem für die Umsetzung eingesetzten organischen Lösungsmittel gelöst oder ganz oder teilweise suspendiert.

In einer typischen Ausführungsform des erfindungsgemäßen Verfahrens werden die Organozink-Alkoholate oder Organozink-Amide als Synthesezwischenprodukte enthaltenden Syntheselösungen bzw. Reaktionslösungen in einem nachfolgenden Schritt unmittelbar mit geeigneten Silylierungs-, Acylierungs-, Alkylierungs- und Arylierungsreagenzien zur Reaktion gebracht, wobei das gewünschte Reaktionsprodukt durch Umsetzung des Alkoholats oder Amids mit dem Silylierungs-, Acylierungs-, Alkylierungs- oder Arylierungsmittel und eine Zinkverbindung wie z. B. Organo-Zinkhalogenid gebildet werden.

Das gewünschte Syntheseprodukt, eine Silyl-, Acyl-, Alkyl- oder Aryloxyverbindung oder Silyl-, Acyl-, Alkyl- oder Arylaminverbindung und die Zinkverbindung sind in dem organischen Lösungsmittel gelöst oder ganz oder teilweise suspendiert.

Nach Zugabe eines erfindungsgemäßen Fällungsreagenz, wie z. B. Piperazin fällt ein schwer löslicher Zinksalz-Piperazin-Komplex aus.

Aus Heathcock et al. (M. M. Hansen, P. A. Bartlett, C. H. Heathcock, Organometallics, 1987, 6, S. 2069) ist beispielsweise die Herstellung von Komplexen eines Ethylzink-Enolats und den Diaminen (-)-Spartein und N,N,N',N'-Tetramethylethylendiamin durch Zufügen der Diamine zu dem Zink-Enolat in den Lösungsmitteln Tetrahydrofuran, Diethylether und Toluol bekannt. Die Komplexe aus Ethylzink-Enolat und Diamin bleiben bei Reaktion mit Benzaldehyd in Lösung und nach Umsetzung wurde die Reaktionsmischung durch Zugabe von wässriger Ammoniumchlorid-Lösung hydrolysiert, wobei das Zink in gelöster Form in der wässrigen Phase anfällt.

Nach dem erfindungsgemäßen Verfahren hingegen gelingt die überraschend hocheffektive Entfernung des Zinks gerade durch die Maßnahmenkombination Gegenwart eines Silylierungs-, Acylierungs-, Alkylierungs- oder Arylierungsreagens und eines Fällungsreagenzes mit mindestens zwei Stickstoff-Donatoren in einem organischem Lösungsmittel.
Dadurch wird das Zink-Alkoholat oder Zink-Amid in ein Zinksalz wie z. B. Zinkhalogenid überführt, das zusammen mit dem Fällungsreagenz einen schwer löslichen und gut abtrennbaren Feststoff bildet, der es ermöglicht, das Zink praktisch quantitativ aus der organischen Reaktionslösung abzutrennen.

In einer besonders bevorzugten Ausführungsform der Erfindung wird bei der Entfernung von Zink aus organischen Lösungen enthaltend Organozink-Alkoholate und Organozink-Amide gegebenenfalls zur vollständigen Ausfällung des Zinks in geringer Menge bezogen auf die Zinkverbindung ein Protonendonator zugegeben. Durch Zugabe des Protonendonators wird die Zinkverbindung wie z. B. das Alkyl- oder Arylzink-Halogenid in einen Kohlenwasserstoff und ein Zinksalz (z. B. Zinkdihalogenid) überführt.
Die gegebenenfalls dabei in die Reaktionsmischung eingetragenen geringfügigen Mengen an Wasser, insbesondere durch Verwendung von wässrigen Säuren, kann bei der weiteren Aufarbeitung des gewünschten Reaktionsproduktes problemlos zusammen mit dem organischen Lösungsmittel, beispielsweise in Form eines Azeotrops, destillativ entfernt werden.

Werden die als Fällungsreagenzien verwendeten Verbindungen bereits vor oder während der Bildung der Zink-Alkoholate oder Zink-Amide zugesetzt, dann müssen die Verbindungen unter den Bedingungen der Bildung der Zink-Alkoholate oder Zink-Amide inert sein. Die Fällungsreagenzien dürfen nicht mit den Organo-Zinkverbindungen, wie beispielsweise Reformatsky-Reagenzien, oder Diaryl-/Dialkylzinkverbindungen reagieren und dürfen deshalb keine unter den gegebenen Reaktionsbedingungen reaktiven funktionellen Gruppen, wie beispielsweise Aldehydfunktionen, enthalten.

Wegen der Basizität von Reformatsky-Reagenzien sollten bei deren Einsatz die als Fällungsreagenz verwendeten Verbindungen, sofern diese bereits vor oder während der Bildung der Zink-Alkoholate oder Zink-Amide zugesetzt werden, keine aciden Protonen, insbesondere solche mit einem pKₐ kleiner 20 zum Beispiel in Form freier Amidfunktionen NH-C=O oder NH-SO₂ oder Hydroxyfunktionen besitzen. Somit wird insbesondere-die Verwendung großer Überschüsse an Reformatsky-Reagenz vermieden.

Üblicherweise sind die Stickstoff-Donatoren der im erfindungsgemäßen Verfahren verwendeten Fällungsreagenzien N-Heteroaromaten, Amin-, Imin- oder Enamin-Gruppen.

Bevorzugte Fällungsreagenzien sind Zinkionen chelatisierende Verbindungen mit N-Heteroaromaten und Amin-Gruppen, besonders bevorzugt Verbindungen mit mindestens zwei N-Heteroaromaten oder mindestens zwei sekundären und/oder tertiären Amin-Gruppen.

Insbesondere sind als Fällungsreagenzien Diaminverbindungen mit N-Heteroaromaten oder sekundären und/oder tertiären Amin-Gruppen bevorzugt oder Verbindungen mit mindestens zwei N-Heteroaromaten oder mindestens zwei Amin-Gruppen.

Besonders geeignete Fällungsreagenzien für das erfindungsgemäße Verfahren sind Ethylendiamin und dessen Derivate wie z. B. N,N'-Dimethyl-, N,N,N'-Trimethyl-, N,N,N',N'-Tetramethylethylendiamin, N,N'-Diethyl-, N,N,N'-Triethyl-, N,N,N',N'-Tetraethylethylendiamin, 1,2-Diphenyl-ethylendiamin und dessen Derivate, 1,2-Di(tert.-butyl) -1,2-ethylendiamin und dessen Derivate, N,N'-Bis(1-phenylethyl) -1,2-ethylendiamin und dessen Derivate, Diaminopropan und dessen Derivate wie z. B. N,N'-Dimethyl-, N,N,N'-Trimethyl-, N,N,N',N'-Tetramethyldiaminopropan, N,N'-Bis(1-Phenylethyl)-1,2-propylendiamin und dessen Derivate, Diaminobutan und dessen Derivate wie z. B. N,N'-Dimethyl-, N,N,N'-Trimethyl-, N,N,N',N'-Tetramethyldiaminobutan, 2,3-Dialkoxy-1,4-diaminobutan und dessen Derivate, Piperazin und dessen Derivate, 1,4-Diazabicyclo[2.2.2]octan und dessen Derivate, 3,7-Diazabicyclo[3.3.1]nonan-Verbindungen, (-)-Spartein, 1,1'-Binaphthyl-2,2'-diamin und dessen Derivate, 2,2'-Bipyridyle, 1,10-Phenanthrolin und dessen Derivate, Pyrazin und dessen Derivate, 2,2'-Bipyrrolidine, Aminopyridine, Aminoalkylsubstituierte Pyridine, Aminopyrrolidine, Aminoalkylsubstituierte Pyrrolidine, Aminopiperidine, Aminoalkylsubstituierte Piperidine, Phenylendiamin und dessen Derivate, 1,2-Diaminocyclohexan und dessen Derivate, aminosubstituierte Dioxolane wie z. B. 4,5-Di(aminomethyl)-2,2-dimethyldioxolan, 2-(Aminomethyl)-pyrrolidin und dessen Derivate, 2-(2-Pyridyl)-pyrrolidin und dessen Derivate, oder N,N'-Bis(1-phenylethyl)-4,5-diamino-1,7-octadien und dessen Derivate, Diaminosäureverbindungen, Diamine, die sich von Aminosäuren ableiten oder Diamine mit Ester-, Amid-, Ether-, Thioether-, Thioester-, Alkoxy-, Aryloxy-, Silyloxy-, Nitril-, Acetal- und Ketalfunktionen.

Für das erfindungsgemäße Verfahren sind insbesondere Ethylendiamin, N,N'-Dimethyl-, N,N,N'-Trimethyl-, N,N,N`,N`-Tetramethylethylendiamin, Diaminopropan, N,N'-Dimethyl-, N,N,N'-Trimethyl-, N,N,N',N'-Tetramethyldiaminopropan, Diaminobutan, N,N'-Dimethyl-, N,N,N'-Trimethyl-, N,N,N',N'-Tetramethyldiaminobutan, Piperazin, 1,4-Diazabicyclo[2.2.2]octan, (-)-Spartein, 1,1'-Binaphthyl-2,2' diamin, 2,2'-Bipyridyl, Pyrazin, 1,2-Phenylendiamin, 1,2-Diaminocyclohexan und N,N'-Bis(1-phenylethyl)-4,5-diamino-1,7-octadien als Fällungsreagenzien geeignet.

Hierbei sind Ethylendiamin, Diaminopropan, Diaminobutan, Piperazin, 1,4-Diazabicyclo[2.2.2]octan, (-)-Spartein, 2,2'-Bipyridyl und Pyrazin als Fällungsmittel besonders bevorzugt.

Durch Verwendung von Piperazin als Fällungsreagenz werden schwer lösliche, sehr gut filtrierbare Zinksalz-Komplexe gebildet, die es ermöglichen, das Zinksalz besonders effektiv und nahezu quantitativ aus der organischen Reaktionslösung abzutrennen.

Als Alkylierungs- oder Arylierungs-, Veresterungs- oder Silylierungsreagenzien finden alle hierfür geeigneten, dem Fachmann aus dem Stand der Technik wohlbekannten Reagenzien Verwendung.

Bevorzugte Alkylierungsmittel sind Methyl-, Ethyl-, Propyl-, Butyl-, Benzylchlorid, -bromid, -iodid, Methyl-, Ethyl-, Propyl-, Butyl-, Benzyltosylat und -triflat und Dimethylsulfat.

Bevorzugte Arylierungsreagenzien sind Fluorbenzol, 1-Fluor-4-trifluormethylbenzol, 1-Fluornaphthalin, Chlorbenzol, 1-Chlor-4-trifluormethylbenzol und 1-Chlornaphthalin.

Bevorzugte Veresterungsreagenzien sind Acetylchlorid, -bromid, Acetanhydrid, Keten und Dimethyl- und Diethylcarbonat.

Bevorzugte Silylierungsreagenzien sind Trimethyl-, -ethyl-, propyl-, -butylchlorsilan und tert.-Butyldimethylchlorsilan.

Es hat sich bewährt, die Zink-Alkoholate oder Zink-Amide, die Silylierungs-, Acylierungs-, Alkylierungs- oder Arylierungsreagenzien und das Fällungsreagenz im Molverhältnis 1 : (1 bis 10) : (1 bis 5), insbesondere 1 : (1 bis 3) : (1 bis 2), besonders bevorzugt 1 : (1 bis 1.5) : (1 bis 1.5) umzusetzen.

Die Umsetzungen der Zink-Alkoholate oder Zink-Amide mit den Silylierungs-, Acylierungs-, Alkylierungs- oder Arylierungsreagenzien und den als Fällungsmittel verwendeten mindestens zwei Stickstoff-Donatoren enthaltenden Verbindungen werden vorzugsweise bei Temperaturen von -80 bis +250 °C, besonders bevorzugt bei -40 bis +150 °C, insbesondere bei -20 bis +80 °C, gegebenenfalls unter Refluxion, durchgeführt.

Vorzugsweise hält man während der Zugabe der Silylierungs-, Acylierungs-, Alkylierungs- oder Arylierungsreagenzien und dem Fällungsreagenz die Temperatur der exothermen Reaktion gegebenenfalls durch Kühlung auf einem vorgegebenen Wert. Dabei kann die obere Temperaturgrenze durch den Siedepunkt des eingesetzten Lösungsmittels, wie beispielsweise Tetrahydrofuran (Kp.: 66 °C) oder Ethylacetat (Kp.: 78 °C) begrenzt sein. Bei höhersiedenden Lösungsmitteln, wie beispielsweise 1;4-Dioxan (Kp.: 100-102 °C) wird die Temperatur der Reaktion vorzugsweise durch Kühlung kontrolliert.

Der Druckbereich der Reaktion ist unkritisch und kann innerhalb weiter Grenzen variiert werden. Der Druck beträgt üblicherweise 0.01 bis 20 bar, bevorzugt wird die Reaktion unter Normaldruck (Atmosphärendruck) durchgeführt.

Die Reaktion wird bevorzugt unter Inertisierung mit Schutzgas, wie Stickstoff oder Argon durchgeführt. Die Reaktion kann kontinuierlich oder diskontinuierlich, bevorzugt diskontinuierlich durchgeführt werden.

Nach Ende der Zugabe aller beteiligten Bestandteile lässt man vorzugsweise noch 5 min bis 15 h, besonders bevorzugt 20 min bis 8 h, insbesondere 30 min bis 5 h nachreagieren, um die Umsetzung und Ausfällung des Zinksalz-Komplexes zu vervollständigen.

Um eine möglichst vollständige Ausfällung der Zinksalze nach Zugabe des Fällungsreagenz zu erreichen wird in einer bevorzugten Ausführungsform der Erfindung, insbesondere bei Verwendung von zur Koordination an Zinkionen befähigten Lösungsmitteln wie z. B. Tetrahydrofuran oder Ethylacetat notwendig, das Lösungsmittel aus der Reaktionsmischung weitestgehend abzudestillieren und durch wenig koordinierende Lösungsmittel wie z. B. Pentan oder Benzol zu ersetzen.

In einer bevorzugten Ausführungsform der Erfindung wird zur möglichst quantitativen Ausfällung und Abtrennung der ausgefällten Zinksalze durch Filtration oder Zentrifugation die Temperatur der Mischung erniedrigt. Die Temperaturen betragen dabei üblicherweise zwischen -80 und +40 °C, insbesondere -40 und +15 °C. Bei destillativer Aufarbeitung werden die eingesetzten Lösungsmittel vorteilhaft in wasserfreier Form zurückgewonnen und können für den zinkorganische Synthesen erneut eingesetzt werden.

In einer möglichen Ausführungsform des erfindungsgemäßen Verfahrens wird zur Überführung der Zinkverbindung wie z. B. des Alkyl- oder Arylzink-Halogenids in einen Kohlenwasserstoff und ein Zinksalz (z. B. Zinkdihalogenid) ein Protonendonator zugesetzt.

Der Protonendonator wird dabei in geringen Mengen von 0.1 bis 10 Äquivalenten, bevorzugt 0.1 bis 5 Äquivalenten, besonders bevorzugt 0.5 bis 2 Äquivalenten bezogen auf die Zinkverbindung zugesetzt.

Als Protonendonator werden Säuren, wässrige Säuren oder Basen, Wasser, Alkohole oder wässriger Ammoniak eingesetzt.

Geeignete Säuren sind Brönstedt-Säuren, insbesondere starke Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluss-, Jodwasserstoff-, Bromwasserstoff-, Perchlor-, Hexafluorophosphorsäure, Benzolsulfon-, p-Toluolsulfon-, Methansulfon-, Trifluormethansulfonsäure, Carbonsäuren, wie Chloressig-, Trichloressig-, Essig-, Acryl-, Benzoe-, Trifluoressig-, Citronen-, Croton-, Ameisen-, Fumar-, Malein-, Malon-, Gallus-, Itacon-, Milch-, Wein-, Oxal-, Phthal- und Bernsteinsäure und protonenhaltige Salze, gegebenenfalls in Form wässriger Lösungen, wie Hydrogencarbonat, Hydrogensulfat, Hydrogenphosphat, Dihydrogenphosphat in Form ihrer Ammonium-, Natrium-, Kalium-, Magnesium- und Calciumsalze sowie Ammoniumchlorid und -bromid. Protonenhaltige Salze werden gegebenenfalls direkt in Form ihrer Feststoffe eingesetzt.

Geeignete Basen sind Ammoniak und organische Amine, wie Alkyl /Arylamine und Alkanolamine.

Geeignete Alkohole sind primäre, sekundäre und tertiäre Alkohole sowie aromatische Alkohole wie Methanol, Ethanol, Propanol, Butanol, Isopropanol, Isobutanol, sec.-Butanol, tert.-Butanol und Phenol.

Insbesondere werden Salzsäure, Schwefelsäure, Essigsäure, Citronensäure, Natriumhydrogencarbonat, Kaliumhydrogencarbonat, Natriumhydrogensulfat, Kaliumhydrogensulfat, Ammoniumchlorid, wässriger Ammoniak, Methanol, Ethanol, Isopropanol, Wasser, bevorzugt Salzsäure, Schwefelsäure, Essigsäure, Natriumhydrogencarbonat, Kaliumhydrogencarbonat, Ammoniumchlorid, Methanol, Ethanol und Isopropanol eingesetzt. Die Säure kann in konzentrierter Form oder in Form einer verdünnten wässrigen Lösung eingesetzt werden.

Werden wässrige Protonendonatoren eingesetzt, dann werden in einer bevorzugten Ausführungsform des erfindungsgemäßen Verfahrens die Volumina so gewählt, dass der Anteil an Wasser im Verhältnis zu organischem Lösungsmittel sehr gering ist, vorzugsweise 0.05 bis 25 Volumen-%, besonders bevorzugt 0.05 bis 20 Volumen-%, insbesondere 0.1 bis 10 Volumen-%.

Nach Abtrennung des ausgefällten Zinksalz-Komplexes werden gegebenenfalls geringe Mengen Wasser, zugefügt durch den Protonendonator wie beispielsweise wässrige Salzsäure oder Schwefelsäure, zusammen mit organischem Lösungsmittel, gegebenenfalls in Form eines Azeotrops, entfernt. Die Lösungsmittel werden dabei in wasserfreier Form erhalten und können in den Syntheseprozess zurückgeschleust werden.

Die Vorteile des erfindungsgemäßen Verfahrens liegen insbesondere darin, dass die nahezu vollständige Ausfällung und Abtrennung der Zinksalze unmittelbar aus den Reaktionslösungen in organischem Lösungsmittel ohne vorangehende hydrolytische Aufarbeitung erfolgt. Im Gegensatz zu den aus dem Stand der Technik bekannten Verfahren, bei denen grundsätzlich aus wässrigen zinkhaltigen Lösungen das Zink ausgefällt wird und bei denen auch nach Abtrennung der Niederschläge große Mengen an schwermetallbelasteten Abwässern verbleiben, die aufwändig aufgearbeitet werden müssen, entsteht bei dem erfindungsgemäßen Verfahren keine zinkhaltige wässrige Phase und kein-Abwasser, das zumeist auch aufwändig von organischen Verunreinigungen befreit werden muss. Das erfindungsgemäße Verfahren ist deshalb ein aus ökonomischen und ökologischen Gründen sehr vorteilhafter Prozess, vor allem auch deshalb, weil insbesondere bei Anwendung im technischen Maßstab Abfallmengen reduziert werden.

Zudem werden die eingesetzten organischen Lösungsmittel in wasserfreier Form zurückgewonnen und können vorteilhaft in den zinkorganischen Syntheseprozessen wiedereingesetzt werden. Eine oftmals sehr aufwändige, weitere Behandlung der wiedergewonnenen Lösungsmittel zur Entfernung von Wasser ist nicht notwendig, was das erfindungsgemäße Verfahren besonders wirtschaftlich macht.

Da im Gegensatz zu vorbekannten Verfahren keine Behandlung mit Fällungsmitteln wie z. B. Sulfid, Polysulfid, Polysulfan oder Trithiocarbonat erfolgt und die Reaktionsprodukte unter den Bedingungen der Umsetzung mit den als Fällungsreagenzien eingesetzten Verbindungen keine unerwünschten Nebenprodukte und Verunreinigungen bilden, ist die Qualität der hergestellten Produkte besonders hoch, was sich vorteilhaft auf die Wirtschaftlichkeit des gesamten Herstellungsprozesses auswirkt.

Ferner lassen sich die eingesetzten Fällungsreagenzien sehr einfach und in hohen Ausbeuten aus ihren Zinksalz-Komplexen zurückgewinnen und wiederverwenden, was das erfindungsgemäße Verfahren insbesondere bei der Durchführung im technischen Maßstab besonders kostengünstig und wirtschaftlich macht.

Der Zinksalz-Komplex wird dazu in einem geeigneten Lösungsmittel wie Toluol, Xylol, Heptan oder Dibutylether suspendiert und in Gegenwart einer Hydroxid- oder Oxid-Base wie z. B. festem Natriumhydroxid ohne Verwendung von Wasser als Lösungsmittel erhitzt, wobei das Fällungsreagenz aus dem Komplex unter Bildung von schwerlöslichem Zinksalz, wie z. B. Zinkhydroxid freigesetzt wird. Nach Filtration wird das Fällungsreagenz nach Entfernen von Lösungsmittel zurückgewonnen. Das Fällungsreagenz und das wasserfreie Lösungsmittel werden besonders vorteilhaft in den Prozess zurückgeschleust, was das erfindungsgemäße Verfahren aus großtechnischer Sicht besonders wirtschaftlich und wegen der Schonung von Ressourcen umweltschonend macht.

Als Lösungsmittel für die Rückgewinnung sind insbesondere Ether, Kohlenwasserstoffe und Kohlenwasserstoff-substituierte Silane und Siloxane bevorzugt.
Als Ether eignen sich Mono- und Polyether, vorzugsweise symmetrische und unsymmetrische Di-C₁-C₁₀-Kohlenwasserstoffether, beispielsweise Dibutylether, Tetrahydrofuran, Dihexylether, Diphenylether, Anisol, Phenetol oder cyclische Ether, wie Cumaron und Tetrahydrofuran. Beispiele für Polyether sind Polyethylenglykoldimethylether und Polyethylenglykoldiethylether.
Als aromatische oder aliphatische Kohlenwasserstoffe sind C₁-C₂₀-Kohlenwasserstoffe und deren Gemische bevorzugt, wie Toluol, Ethylbenzol, Propylbenzol, Isopropylbenzol, Butylbenzol, Xylol, Xylol-Isomerengemisch, Trimethylbenzol, Heptan, Octan, Isooctan, Nonan, Nonan-Fraktion, Cycloheptan, Cyclooctan, Dimethylcyclohexan, Ethylcyclohexan, Propylcyclohexan, Butylcyclohexan, Petroleumbenzin und Paraffin.
Kohlenwasserstoff-substituierte Silane und Siloxane sind Kohlenwasserstoffe, in denen eine oder mehrere Methylengruppen auch durch Dialkylsilyl- oder Dialkylsiloxygruppen ersetzt sein können. Bevorzugte Beispiel sind Tetraethylsilan, Tetrapropylsilan, Tetrabutylsilan, Dimethyldiphenylsilan und Polydimethylsiloxan.
Lösungsmittel oder Lösungsmittelgemische mit einem Siedepunkt bzw. Siedebereich von bis zu 250° C bei 0,1 MPa sind bevorzugt.

Als Hydroxid- und Oxid-Basen für die Rückgewinnung besonders geeignet sind die Hydroxide und Oxide von Lithium, Natrium, Kalium, Magnesium und Calcium. Bevorzugt werden Alkali- und Erdalkalihydroxide, insbesondere Natrium- und Kaliumhydroxid eingesetzt. Die festen Alkali- und Erdalkalibasen werden in Form von Plätzchen, Schuppen, Kugeln, Perlen, Prills, Microprills oder pulverförmig, bevorzugt pulverförmig und als Prills oder Microprills eingesetzt.

Das Rückgewinnungs-Verfahren wird vorzugsweise bei Temperaturen von 30 bis 300°C insbesondere bei 60 bis 200°C durchgeführt. Während der Umsetzung hält man die Temperatur auf dem vorgegebenen Wert. Gegebenenfalls kann die obere Temperaturgrenze durch den Siedepunkt des eingesetzten inerten Lösungsmittels, wie z. B. Di-*n*-butylether (Kp.: 140-143 °C), Heptan-Fraktion (Kp.: 93-99 °C) oder Xylol-Isomerengemisch (Kp.: 137-143 °C) begrenzt sein.

So lässt sich beispielsweise Piperazin und (-)-Spartein sehr einfach aus ihren Zinksalz-Komplexen durch Behandlung mit Natriumhydroxid in Toluol, Hexan oder Heptan als Lösungsmittel wasserfrei in sehr hohen Ausbeuten von bis zu > 95 % zurückgewinnen und wiederverwenden. Dabei gebildeter Zinkhydroxid-haltiger wasserfreier Feststoff kann besonders effektiv durch Filtration abgetrennt, vorteilhaft in wasserfreier Form transportiert und dem Zink-Recycling zugeführt werden.

Insbesondere lässt sich die Wiedergewinnung bei der Verwendung von Piperazin und (-)-Spartein als Diamin-Fällungsmittel mit hohen Ausbeuten durchführen.

Insbesondere lassen sich Piperazin und (-)-Spartein bei Umsetzung der zinkorganischen Reaktionsmischung mit Trialkylhalogensilan, insbesondere mit Trimethylchlorsilan, als Feststoffe in Form eines zinkhaltigen Salzes in sehr hohen Ausbeuten isolieren , durch Filtration abtrennen und zu > 95 % zurückgewinnen. Dadurch gelingt eine nahezu vollständige Abtrennung des Zinks aus der Reaktionslösung. Die einfache und effektive Rückgewinnung von Piperazin und (-)-Spartein, insbesondere von Piperazin, macht das erfindungsgemäße Verfahren besonders wirtschaftlich.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

### Abtrennung von Zink bei Herstellung von 3-Trimethylsiloxy-3-(2'-phenylethyl)capronsäuremethylester durch Reformatsky-Reaktion unter Verwendung von Piperazin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Ethylacetat vorgelegt. Nachdem 1.13 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 60 °C gehalten wurde. Dann wurde die Mischung 10 min bei 55 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 7.4 g Piperazin (85 mmol) als Feststoff zugegeben. Die Mischung wurde dann 3 h bei 50 °C gerührt. Nachdem das Lösungsmittel Ethylacatat nahezu vollständig abdestilliert wurde (Wiedergewinnung des wasserfreien Lösungsmittels), fügte man 40 ml Pentan zu, kühlte die Suspension auf -20 °C ab, rührte 1 h und filtrierte gebildeten Feststoff (Komplex aus Zinkbromidchlorid und Piperazin) ab. Der Feststoff wurde dreimal mit 10 ml Pentan gewaschen. Pentan wurde im Vakuum abdestilliert (Rückgewinnung Pentan) und das gewünschte Produkt 3-Trimethylsiloxy-3-(2'-phenylethyl)capronsäuremethylester in einer Ausbeute von 17.4 g (95 % d. Th.) und einer Reinheit von > 97 % (HPLC) erhalten. Der Zinkgehalt des Produkts-beträgt 20 ppm (ICP).

### Beispiel 2:

### Abtrennung von Zink bei Herstellung von 3-Trimethylsiloxy-3-(2'-phenylethyl)capronsäuremethylester durch Reformatsky-Reaktion unter Verwendung von Piperazin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 1.13 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 50 °C gehalten wurde. Dann wurde die Mischung 10 min bei 50 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 7.4 g Piperazin (85 mmol), gelöst in 90 ml Tetrahydrofuran, zugegeben wobei sich unmittelbar ein Niederschlag bildete. Dann wurden 90 ml Tetrahydrofuran abdestilliert (Wiedergewinnung des wasserfreien Lösungsmittels) und man filtrierte den gebildeten Niederschlag (Komplex aus Zinkbromidchlorid und Piperazin) ab. Der Niederschlag wurde zweimal mit je 30 ml Tetrahydrofuran gewaschen, und man destillierte anschließend Tetrahydrofuran im Vakuum vollständig ab (Wiedergewinnung des wasserfreien Lösungsmittels). Der Rückstand wurde mit 40 ml Pentan versetzt, auf -20 °C abgekühlt, 60 min gerührt, und man filtrierte Reste an Feststoff ab. Pentan wurde im Vakuum abdestilliert (Rückgewinnung Pentan) und das gewünschte Produkt 3-Trimethylsiloxy-3-(2'-phenylethyl)capronsäuremethylester in einer Ausbeute von 16.7 g (91 % d. Th.) und einer Reinheit von > 97 % (HPLC) erhalten. Der Zinkgehalt des Produkts beträgt 5 ppm (ICP).

### Beispiel 3:

### Abtrennung von Zink bei Herstellung von 3-Trimethylsiloxy-3-(2'-phenylethyl)capronsäuremethylester durch Reformatsky-Reaktion unter Verwendung von 1,4-Diazabicyclo[2.2.2]octan als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 1.13 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 50 °C gehalten wurde. Dann wurde die Mischung 10 min bei 50 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 9.6 g 1,4-Diazabicyclo[2.2.2]octan (85 mmol), gelöst in 55 g Tetrahydrofuran, zugegeben wobei sich unmittelbar ein Niederschlag bildete. Dann filtrierte man den gebildeten Niederschlag (Komplex aus Zinkbromidchlorid und 1,4-Diazabicyclo[2.2.2]octan) ab. Der Niederschlag wurde zweimal mit je 30 ml Tetrahydrofuran gewaschen, und man destillierte anschließend Tetrahydrofuran im Vakuum vollständig ab (Recycling wasserfreien Lösungsmittels). Der Rückstand wurde mit 50 ml Pentan versetzt, auf -20 °C abgekühlt, 60 min gerührt, und man filtrierte Reste an Feststoff ab. Pentan wurde im Vakuum abdestilliert (Rückgewinnung Pentan) und das gewünschte Produkt 3-Trimethylsiloxy-3-(2'phenylethyl)capronsäuremethylester in einer Ausbeute von 16 g (87 % d. Th.) und einer Reinheit von > 97 % (HPLC) erhalten. Der Zinkgehalt des Produkts beträgt 70 ppm (ICP).

### Beispiel 4: Abtrennung von Zink bei Herstellung von 3-Trimethylsiloxy-3-(2'-phenylethyl)capronsäuremethylester durch Reformatsky-Reaktion unter Verwendung von Piperazin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Ethylacetat vorgelegt. Nachdem 1.13 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 40 °C gehalten wurde. Dann wurde die Mischung 10 min bei 40 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Nachdem das Lösungsmittel Ethylacatat abdestilliert wurde (Wiedergewinnung des wasserfreien Lösungsmittels), fügte man 40 ml Pentan zu und anschließend bei 20 °C 7.4 g festes Piperazin (85 mmol). Die Mischung wurde dann 6 h bei 50 °C gerührt, und man kühlte die Suspension auf -20 °C ab, rührte 1 h und filtrierte gebildeten Feststoff (Komplex aus Zinkbromidchlorid und Piperazin) ab. Der Feststoff wurde dreimal mit 10 ml Pentan gewaschen. Die Mischung wurde nochmals filtriert, Pentan im Vakuum abdestilliert (Rückgewinnung Pentan) und das gewünschte Produkt 3-Trimethylsiloxy-3-(2'-phenylethyl)capronsäuremethylester in einer Ausbeute von 15.8 g (86 % d. Th.) und einer Reinheit von > 97 % (HPLC) erhalten. Der Zinkgehalt des Produkts beträgt 40 ppm (ICP).

### Beispiel 5:

### Abtrennung von Zink bei Herstellung von 3-Trimethylsiloxy-3-(2'-phenylethyl)capronsäuremethylester durch Reformatsky-Reaktion unter Verwendung von N,N,N',N'-Tetramethylethylendiamin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 1.13 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 50 °C gehalten wurde. Dann wurde die Mischung 10 min bei 50 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Dann wurde die Mischung 30 min bei 40 °C gerührt. Bei 20 °C wurden anschließend 9.9 g N,N,N',N'-Tetramethylethylendiamin (85 mmol) unverdünnt zugegeben. Die Mischung wurde dann 3 h bei 50 °C gerührt. Nachdem das Lösungsmittel Tetrahydrofuran nahezu vollständig abdestilliert wurde (Recycling wasserfreien Lösungsmittels), fügte man 40 ml Pentan zu, kühlte die Suspension auf -20 °C ab, rührt 1 h und filtrierte gebildeten Feststoff (Komplex aus Zinkbromidchlorid und N,N,N',N'-Tetramethylethylendiamin) ab. Der Feststoff wurde dreimal mit 10 ml Pentan gewaschen. Pentan wurde im Vakuum abdestilliert (Rückgewinnung Pentan) und das gewünschte Produkt 3-Trimethylsiloxy-3-(2'-phenylethyl)capronsäuremethylester in einer Ausbeute von 16.9 g (92 % d. Th.) und einer Reinheit von > 97 % (HPLC) erhalten. Der Zinkgehalt des Produkts beträgt 120 ppm (ICP).

### Beispiel 6:

### Abtrennung von Zink bei Herstellung von 3-Trimethylsiloxy-3-phenylpropionsäuremethylester durch Reformatsky-Reaktion unter Verwendung von Ethylendiamin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 1.13 ml Trimethylchlorsilan zugefügt wurden, erwärmte man die Mischung 15 min auf 50 °C, und fügte 6.5 g Benzaldehyd (57 mmol) unverdünnt zu. Anschließend wurden bei 45 °C innerhalb 5 min 10.4 g Bromessigsäuremethylester (68 mmol) zugetropft, wobei die Temperatur durch externe Kühlung bei 50 °C gehalten wurde. Dann wurde die Mischung 10 min bei 50 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 5.1 g Ethylendiamin (85 mmol) unverdünnt zugegeben. Die Mischung wurde dann 3 h bei 50 °C gerührt. Nachdem das Lösungsmittel Tetrahydrofuran nahezu vollständig abdestilliert wurde (Wiedergewinnung des wasserfreien Lösungsmittels), fügte man 40 ml Pentan zu, kühlte die Suspension auf -20 °C ab, rührt 1 h und filtrierte gebildeten Feststoff (Komplex aus Zinkbromidchlorid und Ethylendiamin) ab. Der Feststoff wurde dreimal mit 10 ml kaltem Pentan gewaschen. Pentan wurde im Vakuum abdestilliert (Rückgewinnung Pentan) und das gewünschte Produkt 3-Trimethylsiloxy-3-phenylpropionsäuremethylester in einer Ausbeute von 13.1 g (91 % d. Th.) und einer Reinheit von > 95 % (HPLC) erhalten. Der Zinkgehalt des Produkts beträgt 110 ppm (ICP).

### Beispiel 7:

### Abtrennung von Zink bei Herstellung von 3-Acetoxy-3-phenylpropionsäuremethylester durch Reformatsky-Reaktion unter Verwendung von Piperazin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 0.8 ml Trimethylchlorsilan zugefügt wurden, erwärmte man die Mischung 15 min auf 50 °C, und fügte 6.5 g Benzaldehyd (57 mmol) unverdünnt zu. Anschließend wurden bei 45 °C innerhalb 5 min 10.4 g Bromessigsäuremethylester (68 mmol) zugetropft, wobei die Temperatur durch externe Kühlung bei 50 °C gehalten wurde. Dann wurde die Mischung 10 min bei 50 °C gerührt (Bildung des Zinkalkoholats). Nach Abkühlung auf 10 °C wurden 5.3 g Acetylchlorid (68 mmol) zugefügt und man erwärmte die Mischung 30 min auf 40 °C. Bei 20 °C wurden anschließend 7.4 g Piperazin (85 mmol) als Feststoff zugegeben. Die Mischung wurde dann 3 h bei 50 °C gerührt. Nachdem das Lösungsmittel Tetrahydrofuran nahezu vollständig abdestilliert wurde (Wiedergewinnung des wasserfreien Lösungsmittels), fügte man 40 ml Pentan zu, kühlte die Suspension auf -20 °C ab, rührt 1 h und filtrierte gebildeten Feststoff (Komplex aus Zinkbromidchlorid und Piperazin) ab. Der Feststoff wurde mit dreimal mit 10 ml kaltem Pentan gewaschen. Pentan wurde im Vakuum abdestilliert (Rückgewinnung Pentan) und das gewünschte Produkt 3-Acetoxy-3-phenylpropionsäuremethylester in einer Ausbeute von 11.3 g (89 % d. Th.) und einer Reinheit von > 95 % (HPLC) erhalten. Der Zinkgehalt des Produkts beträgt 20 ppm (ICP).

### Beispiel 8:

### Abtrennung von Zink bei Herstellung von (S)-(+)-3-Undecanol durch Alkylierung mit Diethylzink unter Verwendung von Piperazin als Fällungsmittel

Bei Raumtemperatur wurden in einem Dreihalskolben mit Rückflusskühler, Innenthermometer, Tropftrichter und Rührer unter Stickstoff-Schutzgas 0.16 g (1S,2R)-(-)-2-(N,N-Di-nbutylamino)-1-phenylpropan-1-ol (0.6 mmol) in 18 ml Hexan vorgelegt und 1.4 g Nonanal (10 mmol) zugefügt. Die Mischung wurde 15 min gerührt und auf 0 °C abgekühlt. Zu dieser Mischung wurden 12 ml einer 1 M Lösung von Diethylzink in Hexan (12 mmol) zugefügt, und man rührte die Mischung 14 h bei 0 °C. Dann wurden 1.6 g Trimethylchlorsilan (15 mmol) zugegeben, und die Mischung wurde 30 min auf 40 °C erwärmt. Dann wurden 1.3 g Piperazin (15 mmol) zugefügt und die Mischung 60 min gerührt. Bei -10 °C wurden anschließend 2.3 ml 6 N Salzsäure zugefügt und die Mischung 30 min bei 15 °C gerührt. Nachdem Wasser zusammen mit Hexan abdestilliert wurde, fügte man 40 ml Pentan zu, kühlte die Suspension auf -20 °C ab und filtrierte gebildeten Feststoff ab. Der Feststoff wurde mit dreimal mit 10 ml kaltem Pentan gewaschen. Pentan wurde im Vakuum abdestilliert (Rückgewinnung Pentan) und das gewünschte Produkt (S)-(+)-3-Nonanol in einer Ausbeute von 1.6 g (89 % d. Th.) und einer Reinheit von > 95 % und 87 % ee (HPLC) erhalten. Der Zinkgehalt des Produkts beträgt 30 ppm (ICP).

### Vergleichsbeispiel 9:

### Abtrennung von Zink bei Herstellung von 3-Trimethylsiloxy-3-(2'-phenylethyl)capronsäuremethylester durch Reformatsky-Reaktion unter Verwendung von Triethylamin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 0.8 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 60 °C gehalten wurde. Dann wurde die Mischung 10 min bei 55 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 19.6 ml Triethylamin (142 mmol) unverdünnt zugegeben, wobei es nicht zur Bildung eines Niederschlags kam. Die klare Mischung wurde dann 3 h bei 50 °C gerührt. Nachdem das Lösungsmittel Tetrahydrofuran nahezu vollständig abdestilliert wurde (Wiedergewinnung des wasserfreien Lösungsmittels), fügte man 40 ml Pentan zu, kühlte die Suspension auf -20 °C ab und filtrierte gebildeten Feststoff (Komplex aus Zinkbromidchlorid und Triethylamin) ab. Der Feststoff wurde dreimal mit 10 ml Pentan gewaschen. Pentan wurde im Vakuum abdestilliert (Rückgewinnung Pentan) und das gewünschte Produkt 3-Trimethylsiloxy-3-(2'-phenylethyl)capronsäuremethylester in einer Ausbeute von 15.6 g (85 % d. Th.) und einer Reinheit von > 95 % (HPLC) erhalten. Der Zinkgehalt des Produkts beträgt > 0.5 % (ICP).

### Vergleichsbeispiel 10:

### Abtrennung von Zink bei Herstellung von 3-Trimethylsiloxy-3-(2'-phenylethyl)capronsäuremethylester durch Reformatsky-Reaktion unter Verwendung von Pyridin als Fällungsmittel

Bei Raumtemperatur wurden in einem Dreihalskolben mit Rückflusskühler, Innenthermometer, Tropftrichter und Rührer unter Stickstoff-Schutzgas 4.6 g Zinkpulver (71 mmol) in 40 ml Tetrahydrofuran vorgelegt. Nachdem 0.8 ml Trimethylchlorsilan zugefügt wurden, erwärmte man die Mischung 15 min auf 50 °C, und fügte 10 g 1-Phenylhexan-3-on (57 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu. Anschließend wurden innerhalb 5 min 10.4 g Bromessigsäuremethylester (68 mmol) zugetropft, wobei die Temperatur durch externe Kühlung bei 60 °C gehalten wurde. Dann wurde die Mischung 10 min bei 55 °C gerührt (Bildung des Zinkalkoholats). Nach Abkühlung auf 10 °C wurden 7.4 g Trimethylchlorsilan (68 mmol) zugefügt und man erwärmte die Mischung 30 min auf 40 °C. Bei 20 °C wurden anschließend 11.5 g Pyridin (145 mmol) unverdünnt zugegeben, wobei es zur Bildung eines Niederschlags kam. Die Suspension wurde dann 2 h bei 50 °C gerührt. Nachdem das Lösungsmittel Tetrahydrofuran nahezu vollständig abdestilliert wurde (Wiedergewinnung des wasserfreien Lösungsmittels), fügte man 50 ml Pentan zu, kühlte die Suspension auf -20 °C ab und filtrierte gebildeten Feststoff (Komplex aus Zinkbromidchlorid und Pyridin) ab. Der Feststoff wurde dreimal mit 10 ml Pentan gewaschen. Pentan wurde im Vakuum abdestilliert (Rückgewinnung Pentan) und das gewünschte Produkt 3-Trimethylsiloxy-3-(2'phenylethyl)capronsäuremethylester erhalten (das Produkt enthält 20 Mol-% Pyridin). Der Zinkgehalt des Produkts beträgt 900 ppm (ICP).

### Beispiel 11:

### Rückgewinnung von (-)-Spartein aus gefälltem (-)-Spartein-Zinkbromidchlorid-Komplex (erhalten analog Beispiel 6)

Bei Raumtemperatur wurden in einem Dreihalskolben mit Rückflusskühler, Innenthermometer und Rührer unter Stickstoff-Schutzgas 160 g (-)-Spartein-Zinkbromidchlorid-Komplex (erhalten nach Beispiel 6) (0.385 Mol) und 62 g Natriumhydroxid-Microprills (1.54 Mol) in 350 ml Heptan suspendiert. Man erwärmte die Mischung 4 h auf 95 °C, kühlte anschließend auf 20 °C ab und filtrierte vom Feststoff ab. Der Feststoff wurde dreimal mit 30 ml Heptan gewaschen. Heptan wurde im Vakuum abdestilliert (Rückgewinnung Heptan) und (-)-Spartein in einer Ausbeute von 87.5 g (97 % d. Th.) und einer Reinheit von > 97 % (GC) erhalten. Eine Reinigung von (-)-Spartein ist gegebenenfalls durch Destillation möglich (Siedepunkt: 117 °C / 0.067 mbar).

## Patentansprüche

1. Verfahren zur Entfernung von Zink aus organischen, nicht-wässrigen Lösungen enthaltend Zink-Alkoholate oder Zink-Amide, **dadurch gekennzeichnet, dass** die Lösung mit einem Alkylierungs-, Arylierungs-, Acylierungs- oder Silylierungsreagenz in Gegenwart eines Fällungsreagenz mit mindestens zwei Stickstoff-Donatoren in einem organischen Lösungsmittel unter nicht-wässrigen Bedingungen versetzt wird und anschließend der ausfallende Feststoff abgetrennt wird.

2. Verfahren nach Anspruch 1, **dadurch gekennzeichnet, dass** das Verfahren mit einer Lösung enthaltend Halogenozink-Alkoholate oder Halogenozink-Amide durchgeführt wird.

3. Verfahren nach Anspruch 1 bis 2, **dadurch gekennzeichnet, dass** das Verfahren mit einer Lösung enthaltend Organozink-Alkoholate oder Organozink-Amide durchgeführt wird.

4. Verfahren nach Anspruch 1 bis 3, **dadurch gekennzeichnet, dass** das Verfahren mit einer Lösung enthaltend Organo-Zink-Alkoholate oder Organo-Zink-Amide durchgeführt wird und zusätzlich noch ein Protonendonator in Form von Säuren, wässrige Säuren oder Basen, Wasser, Alkoholen oder wässrigem Ammoniak zugegeben wird.

5. Verfahren nach Anspruch 1 bis 4, **dadurch gekennzeichnet, dass** das Fällungsreagenz mindestens zwei N-Heteroaromaten oder mindestens zwei Amin-Gruppen enthält.

6. Verfahren nach Anspruch 1 bis 5, **dadurch gekennzeichnet, dass** Fällungsreagenz ausgewählt wird aus der Gruppe enthaltend Ethylendiamin, N,N'-Dimethyl-, N,N,N'-Trimethyl-, N,N,N',N'-Tetramethylethylendiamin, Diaminopropan, N,N'-Dimethyl-, N,N,N'-Trimethyl-, N,N,N',N'-Tetramethyldiaminopropan, Diaminobutan, N,N'-Dimethyl-, N,N,N'-Trimethyl-, N,N,N',N'-Tetramethyldiaminobutan, Piperazin, 1,4-Diazabicyclo[2.2.2]octan, (-)-Spartein, 1,1'-Binaphthyl-2,2'-diamin, 2,2'-Bipyridyl, Pyrazin, 1,2-Phenylendiamin, 1,2-Diaminocyclohexan und N,N'-Bis(1-phenylethyl)-4,5-diamino-1,7-octadien.

7. Verfahren nach Anspruch 1 bis 6, **dadurch gekennzeichnet, dass** zur der Lösung als Silylierungsreagenz Trimethylchlorsilan zugesetzt wird.

8. Verfahren nach Anspruch 1 bis 7, **dadurch gekennzeichnet, dass** das Fällungsreagenz aus dem abgetrennten Feststoff wiedergewonnen wird.

9. Verfahren nach Anspruch 1 bis 8, **dadurch gekennzeichnet, dass** das Fällungsreagenz aus dem abgetrennten Feststoff durch Zugabe einer Hydroxid- oder Oxid-Base in einem Lösungsmittel wiedergewonnen wird.

10. Verfahren nach Anspruch 1 bis 9, **dadurch gekennzeichnet, dass** das Fällungsreagens mit dem Organozink-Alkoholat oder Organozink-Amid und dem Silylierungs-, Acylierungs-, Alkylierungs- oder Arylierungsreagens im Molverhältnis (1 bis 1.5) : 1 : (1 bis 1.5) umgesetzt wird.

## Claims

1. Process for removing zinc from organic, nonaqueous solutions comprising zinc alkoxides or zinc amides, **characterized in that** the solution is admixed with an alkylating, arylating, acylating or silylating reagent in the presence of a precipitating reagent having at least two nitrogen donors in an organic solvent under nonaqueous conditions and the precipitated solid is subsequently removed.

2. Process according to Claim 1, **characterized in that** it is carried out using a solution comprising halozinc alkoxides or halozinc amides.

3. Process according to Claim 1 or 2, **characterized in that** it is carried out using a solution comprising organozinc alkoxides or organozinc amides.

4. Process according to Claims 1 to 3, **characterized in that** it is carried out using a solution comprising organozinc alkoxides or organozinc amides and additionally comprises the addition of another proton donor in the form of acids, aqueous acids or bases, water, alcohols or aqueous ammonia.

5. Process according to Claims 1 to 4, **characterized in that** the precipitating reagent contains at least two N-heteroaromatics or at least two amine groups.

6. Process according to Claims 1 to 5, **characterized in that** the precipitating reagent is selected from the group comprising ethylenediamine, N,N'-dimethyl-, N,N,N'-trimethyl-, N,N,N',N'-tetramethylethylenediamine, diaminopropane, N,N'-dimethyl-, N,N,N'-trimethyl-, N,N,N',N'-tetramethyldiaminopropane, diaminobutane, N,N'-dimethyl-, N,N,N'-trimethyl-, N,N,N',N'-tetramethyldiaminobutane, piperazine, 1,4-diazabicyclo[2.2.2]octane, (-)-sparteine, 1,1'-binaphthyl-2,2'-diamine, 2,2'-bipyridyl, pyrazine, 1,2-phenylenediamine, 1,2-diaminocyclohexane and N,N'-bis(1-phenylethyl)-4,5-diamino-1,7-octadiene.

7. Process according to Claims 1 to 6, **characterized in that** trimethylchlorosilane is added to the solution as a silylating reagent.

8. Process according to Claims 1 to 7, **characterized in that** the precipitating reagent is recovered from the removed solid.

9. Process according to Claims 1 to 8, **characterized in that** the precipitating reagent is recovered from the removed solid by adding a hydroxide or oxide base in a solvent.

10. Process according to Claims 1 to 9, **characterized in that** the precipitating reagent is reacted with the organozinc alkoxide or organozinc amide and the silylating, acylating, alkylating or arylating reagent in a molar ratio of (1 to 1.5) : 1 : (1 to 1.5) .

## Revendications

1. Procédé pour éliminer le zinc de solutions organiques, non aqueuses, contenant des alcoolates de zinc ou des amides de zinc, **caractérisé en ce que** la solution est mélangée avec un réactif d'alkylation, d'arylation, d'acylation ou de silylation en présence d'un réactif de précipitation avec au moins deux donneurs d'azote dans un solvant organique dans des conditions non aqueuses et le solide qui précipite est ensuite séparé.

2. Procédé selon la revendication 1, **caractérisé en ce que** le procédé est réalisé avec une solution contenant des alcoolates halogénozinciques ou des amides halogénozinciques.

3. Procédé selon les revendications 1 à 2, **caractérisé en ce que** le procédé est réalisé avec une solution contenant des alcoolates organozinciques ou des amides organozinciques.

4. Procédé selon les revendications 1 à 3, **caractérisé en ce que** le procédé est réalisé avec une solution contenant des alcoolates organozinciques ou des amides organozinciques et en ajoutant en outre encore un donneur de protons sous forme d'acides, d'acides aqueux ou de bases aqueuses, d'eau, d'alcools ou d'ammoniaque aqueuse.

5. Procédé selon les revendications 1 à 4, **caractérisé en ce que** le réactif de précipitation contient au moins deux N-hétéroaromatiques ou au moins deux groupes amine.

6. Procédé selon les revendications 1 à 5, **caractérisé en ce que** le réactif de précipitation est choisi dans le groupe constitué par l'éthylènediamine, la N,N'-diméthyléthylènediamine, la N,N,N'-triméthyléthylènediamine, la N,N,N',N'-tétraméthyléthylènediamine, le diaminopropane, le N,N'-diméthyldiaminopropane, le N,N,N'-triméthyldiaminopropane, le N,N,N',N'-tétraméthyldiaminopropane, le diaminobutane, le N,N'-diméthyldiaminobutane, le N,N,N'-triméthyldiaminobutane, le N,N,N',N'-tétraméthyldiaminobutane, la pipérazine, le 1,4-diazabicyclo-[2.2.2]octane, la (-)-spartéine, la 1,1'-binaphtyl-2,2'-diamine, le 2,2'-bipyridyle, la pyrazine, la 1,2-phénylènediamine, le 1,2-diaminocyclohexane et le N,N'-bis(1-phényléthyl)-4,5-diamino-1,7-octadiène.

7. Procédé selon les revendications 1 à 6, **caractérisé en ce qu'**on ajoute du triméthylchlorosilane à la solution comme réactif de silylation.

8. Procédé selon la revendication 1 à 7, **caractérisé en ce que** le réactif de précipitation est récupéré du solide séparé.

9. Procédé selon les revendications 1 à 8, **caractérisé en ce que** le réactif de précipitation est récupéré du solide séparé par addition d'une base hydroxyde ou oxyde dans un solvant.

10. Procédé selon les revendications 1 à 9, **caractérisé en ce que** le réactif de précipitation est transformé avec l'alcoolate organozincique ou l'amide organozincique et le réactif de silylation, d'acylation, d'alkylation ou d'arylation dans un rapport molaire (1 à 1,5) : 1 : (1 à 1,5).
